# EUROPÄISCHE PATENTSCHRIFT

(11) **EP 1 998 099 B1**
(45) Veröffentlichungstag und Bekanntmachung des Hinweises auf die Patenterteilung: **29.06.2011**
(21) Anmeldenummer: 08163334.9
(22) Anmeldetag: 20.09.2004
(51) Int. Cl.: F16L 55/179, F16L 55/26

(54) **Vorrichtung zur Rohrsanierung**
Apparatus for renovating pipes
Appareil pour la rénovation de canalisations

(30) Priorität: 25.09.2003 DE 20314914 U; 04.12.2003 DE 10357059
(43) Veröffentlichungstag der Anmeldung: 03.12.2008
(62) Teilanmeldung aus: 04022301.8
(73) Patentinhaber: Trelleborg Pipe Seals Duisburg GmbH, 47228 Duisburg (DE)
(72) Erfinder: Mühlin, Michael, 41812, Erkelenz (DE)
(74) Vertreter: Preissner, Nicolaus

(56) Entgegenhaltungen:
- EP-A- 0 253 588
- WO-A-01/61236

## Beschreibung

Die Erfindung betrifft eine Vorrichtung zur Rohrsanierung gemäß dem Oberbegriff des Patentanspruchs 1. Sie betrifft insbesondere eine Vorrichtung und ein Verfahren zur Sanierung der Einmündung des Hausanschlusses von einem Hauptkanal in das Rohr eines Hausanschlusses.

Beispielsweise ist aus der Druckschrift DE 298 02 675 U1 eine Vorrichtung zur Sanierung von Rohranschlüssen bekannt, bei der das Positionierungsmittel von einem Schild gebildet wird, dessen Außenkontur an die Innenkontur des Hauptabwasserrohrs im Bereich der Einmündungsöffnung angepaßt ist und der über einen Auslegearm gegen den Bereich des Hauptabwasserrohrs, der die Einmündungsöffnung umgibt, gedrückt werden kann. Der Auslegearm ist Teil einer Transporteinheit, die im Hauptabwasserrohr verfahrbar ist. Der Schild wird in dem Hauptwasserrohr mittels der Transporteinheit verfahren und bei Erreichen des Einmündungsbereiches mittels des Auslegearms gegen das Hauptabwasserrohr gedrückt. In dem Schild ist eine Austrittsöffnung vorgesehen, durch welche ein Auskleideschlauch hindurchtreten kann. Zum Einbringen des Auskleideschlauchs in den sich an die Einmündungsöffnung anschließenden Rohrstutzen des Hausanschlussrohrs wird der zunächst unterhalb des Schildes befindliche Auskleideschlauch mit Druckluft beaufschlagt. Innerhalb des Auskleideschlauchs ist ein dichter Kalibrierschlauch angeordnet, der den Auskleideschlauch gegen die Rohrwand des Hausanschlussrohrs drückt. Der Auskleideschlauch besteht aus textilem Material, welches mit einem aushärtbaren Harz versehen ist. Nach dem Aushärten des Harzes wird der Kalibrierschlauch, der Schild und die Transporteinheit entfernt, so dass eine T-Rohrwandung das Hausanschlussrohr im Bereich seiner Mündung sowie den die Mündung umgebenden Abschnitt der Rohrwand des Hauptabwasserrohrs auskleidet und abdeckt.

Eine ähnliche Vorrichtung ist aus der Druckschrift DE 42 07 038 (entspricht US 5,609,439) bekannt. Hier wird das Positionierungsmittel als Packer bezeichnet. Der Packer weist einen Gummimantel auf, der um ein Tragrohr herum angeordnet ist und auf den Durchmesser des Hauptrohrs aufblasbar ist. In dem Tragrohr und dem Gummimantel ist eine Öffnung vorgesehen, welche gegenüber der Mündung des Hausanschlussrohrs anzuordnen ist. Auf dem Gummimantel wird eine aushärtbare Rohrauskleidung derart angebracht, dass ein zylinderförmiges Schlauchteil innerhalb des Tragrohrs unterhalb der Öffnung angeordnet ist. Durch Zufuhr von Druckluft in den Packer wird zum einen dessen Gummimantel aufgebläht, bis er dicht gegen das Hauptrohr anliegt. Zum anderen tritt im Bereich der Öffnung ein an dem Gummimantel angeformter Gummizylinder durch die Öffnung aus dem Tragrohr nach außen in das Hausanschlussrohr hinein und stülpt dabei das Schlauchteil der Auskleidung nach außen, so dass es fest gegen die Innenwand des Hausanschlussrohrs gedrückt wird. Nach dem Aushärten der Auskleidung wird die Luft aus dem Packer abgesaugt, wobei der Zylinder an dem Gummimantel wieder durch die Öffnung in das Tragrohr hineingesogen wird. Anschließend kann der Packer entfernt werden.

Das Transportieren derartiger Vorrichtungen durch das Hauptrohr zum Mündungsbereich des Hausanschlussrohrs hat sich bei bekannten Vorrichtungen als problematisch erwiesen. Insbesondere ist die Ausrichtung des schlauchförmigen Teils der Auskleidung zu der Mündung des Hausanschlussrohrs schwierig. Bei Verschiebung dieses schlauchförmigen Auskleidungsabschnittes um einige Zentimeter in axialer Richtung des Hauptrohrs oder bei Verdrehung des Packers um einige Grad wird der schlauchförmige Zylinderabschnitt der Rohrauskleidung nicht zuverlässig in das Hausanschlussrohr hinein umgestülpt. Es können Verformungen auftreten, die beim Aushärten dieses schlauchförmigen Zylinderabschnitts fixiert werden und zu einer undichten Rohrauskleidung führen.

Eine Vorrichtung zur Rohrsanierung ist auch aus der Druckschrift EP 0253 588 A1 bekannt. Hier wird allerdings ein fertiger Anschlussrohrabschnitt an ein Hauptrohr angefügt. Ein aufblasbarer Beutel (bag 150) bildet eine Abdichtung beim Einspritzen von Beton. Der Beutel hat ein Anschlussventil, an das ein Schlauch zum Aufblasen angeschlossen wird. Der Schlauch trennt sich bei einem vorbestimmten Druck von dem Anschlussventil. Der Grenzdruck lässt keinen Rückschluss auf die Ausdehnung des Beutels zu. Auch die WO 01/61236 A2 beschreibt eine Vorrichtung zur Rohrsanierung mit einem aufblasbaren Schlauch (hier Blase genannt). Die Blase weist ein inneres Spannseil (tether 16) auf, das der Invertierung der Blase und des Auskleidungsmaterials in den Hauptköper des Packers für einen sicheren Transport zum Ort der Sanierung dient. Eine weitere Funktion des Spannseils ist nicht offenbart.

Aufgabe der Erfindung ist es, eine Vorrichtung zur Sanierung von Rohranschlüssen zu schaffen, welche das zuverlässige Transportieren und Positionieren der Rohrauskleidung in Bezug auf den auszukleidenden Mündungsbereich des Hausanschlussrohrs vereinfacht.

Diese Aufgabe wird erfindungsgemäß durch die Gesamtheit der Merkmale des Patentanspruchs 1 gelöst. Vorteilhafte Ausführungsformen ergeben sich aus den Unteransprüchen und aus der nachfolgenden Beschreibung.

Der Ausrichtkörper der erfindungsgemäßen Vorrichtung kann vor dem endgültigen Positionieren der Rohrauskleidung in die Mündung des Hausanschlussrohrs hinein bewegt werden. Er sollte dabei zumindest punkt- oder linienförmigen Kontakt mit der Wand des Hausanschlussrohrs im Bereich seiner Mündung haben, so dass die Rohrauskleidung genau zur Achse des Hausanschlussrohrs ausgerichtet ist. Zu diesem Zweck weist der Ausrichtkörper bei einer praktischen Ausführungsform eine Kontur auf, die komplementär zur Innenkontur des Hausanschlussrohrs in seinem Mündungsbereich ausgebildet ist. Der Ausrichtkörper kann aber auch kegelförmig ausgebildet sein, so dass er sich beim Einschieben in das Hausanschlussrohr selbst zentriert. Er kann weiterhin federnde oder teleskopierbare Kontaktfinger aufweisen, welche eine zentrierte Anordnung des Ausrichtkörpers innerhalb des Hausanschlussrohrs gewährleisten.

In einer praktischen Ausführungsform wird der Ausrichtkörper von einem Ring gebildet. Ähnlich den aus dem Stand der Technik bekannten Auskleidungsverfahren kann die Rohrauskleidung ein flexibles Trägermaterial, insbesondere Textilmaterial aufweisen, das mit einem aushärtbaren Harz versehen ist. Die Rohrauskleidung kann weiterhin einen schlauchartigen Zylinderabschnitt aufweisen, der in die Mündung des Hausanschlussrohrs einschiebbar ist. In der Praxis kann dieser schlauchartige Zylinderabschnitt den ringförmigen Ausrichtkörper außen umgeben, wenn der Ausrichtkörper in die Mündung des Hausanschlussrohrs eingeschoben wird.

Wie bei den aus dem Stand der Technik bekannten Verfahren besteht das Positionierungsmittel vorzugsweise aus einer aufblasbaren Hülle, die einen Stutzenschlauch aufweist, der im aufgeblasenem Zustand den Zylinderabschnitt der Rohrauskleidung gegen die Wand des Hausanschlussrohrs drückt. Bei der gerade beschriebenen praktischen Ausführungsform, bei der der Zylinderabschnitt der Rohrauskleidung den ringförmigen Ausrichtkörper beim Einschieben in die Mündung des Hausanschlussrohrs umgibt, ist es vorteilhaft, den Stutzenschlauch der aufblasbaren Hülle zwischen dem Zylinderabschnitt der Rohrauskleidung und dem Ring anzuordnen. Mit anderen Worten wird der schlauchartige Zylinderabschnitt der Rohrauskleidung gemeinsam mit dem Stutzenschlauch der aufblasbaren Hülle durch den ringförmigen Ausrichtkörper in das Innere der Hülle hineingezogen, bevor der ringförmige Ausrichtkörper in den Mündungsbereich des Hausanschlussrohrs bewegt wird. Dabei liegt der Bereich der Einbindung oder Verbindung des Stützenschlauches mit dem angrenzenden Bereich der aufblasbaren Hülle, welche im Wesentlichen im aufgeblasenen Zustand die Kontur des Hauptrohrs einnimmt, gegen den Ring an. Das Gleiche gilt für den Bereich der Einbindung des schlauchartigen Zylinderabschnittes in den angrenzenden Bereich der Rohrauskleidung, welche der Auskleidung des Hauptrohrs dient. Durch den Ausrichtkörper wird also der kritische Bereich des Übergangs der T-förmigen Rohranschlusses, das heißt des Übergangs zwischen dem Hausanschlussrohr und dem Hauptrohr im Bereich der Mündung des Hausanschlussrohrs, durch Eindrücken des Rings in direkten Kontakt mit dem für diesen Übergangsbereich vorgesehenen Abschnitt der Auskleidung gebracht. Beim anschließenden Positionieren der Auskleidung zur Aushärtung in dem Mündungsbereich ist somit sichergestellt, dass sowohl der kritische Übergangsbereich als auch die daran angrenzenden Bereiche der Auskleidung an ihrer vorgesehenen Position in dem Übergangsbereich zwischen Hausanschlussrohr und Hauptrohr anliegen.

Bei einer alternativen Ausführungsform kann der Ausrichtkörper vom Stutzenschlauch der Hülle selbst gebildet werden. Der Stutzenschlauch der Hülle sollte dabei von dem schlauchartigen Zylinderabschnitt der Auskleidung umgeben sein. Mit anderen Worten wird die Hülle teilweise aufgeblasen, so dass der Stutzenschlauch und der diesen umgebenden Zylinderabschnitt teilweise ausgestülpt werden. Bei diesem teilweise ausgestülpten Stutzenschlauch mit Zylinderabschnitt kann dann die Positioniervorrichtung noch verschoben werden, bis der Stutzenschlauch mit Zylinderabschnitt vollständig in die Rohrmündung eingreift. Hierbei ist allerdings eine erhöhte Reibung auf Grund der teilweise aufgeblasenen Hülle zu berücksichtigen. Bei einem Ausrichtkörper, der durch einen separaten Festkörper gebildet wird, besteht nur eine geringe Reibung.

In einer praktischen Ausführungsform weist die Vorrichtung Federmittel auf, die den Ausrichtkörper elastisch federnd in die Mündung des Hausanschlussrohrs drücken. Diese Federmittel sind besonders hilfreich, wenn der Ausrichtkörper nicht exakt zur Mündung des Hausanschlussrohrs ausgerichtet ist. In diesem Fall liegt der Ausrichtkörper federnd gegen die Wand des Hauptrohrs an. Wenn die Verschiebung nur einige Millimeter beträgt und ein schräger Abschnitt des Ausrichtungskörpers gegen die Kante im Mündungsbereich des Hausanschlussrohrs anliegt, rutscht der Ausrichtkörper aufgrund der federnden Andrückkraft in die Mündung des Hausanschlussrohrs hinein. Wenn ein größerer Versatz zwischen dem Ausrichtkörper und der Mündung besteht, ist es möglich, die gesamte Vorrichtung manuell oder durch Antriebsmittel axial zu verschieben oder zu verdrehen, bis eine exakte Ausrichtung vorliegt. Dabei ist es nicht erforderlich, den Mündungsbereich des Hausanschlussrohrs einsehen zu können. Durch das federnde Andrücken des Ausrichtkörpers in Richtung der Mündung wird dieser bei exakter Ausrichtung in die Mündung des Hausanschlussrohrs hinein gedrückt, so dass anschließend kein weiteres axiales Verschieben oder Drehen der Vorrichtung möglich ist. Dieses Verrasten signalisiert dem Bediener, dass die korrekte Ausrichtung erreicht ist.

Das Federmittel kann durch eine federnde Aufhängung des Ausrichtkörpers gebildet werden. Es kann ferner von einem federnden Fahrwerk der gesamten Vorrichtung gebildet werden. Schließlich kann der Ausrichtkörper selbst elastisch-federnd ausgebildet sein, beispielsweise, wenn der mit einem geringen Überdruck angeblasene Stutzenschlauch der aufblasbaren Hülle als Ausrichtkörper wirkt.

Ähnlich dem Stand der Technik kann die erfindungsgemäße Vorrichtung als Packer ausgebildet sein. Die aufblasbare Hülle bildet einen dehnfähigen Packerschlauch, der inversierbar ist, das heißt, er ist von außen nach innen stülpbar und umgekehrt ausgebildet. Der Packerschlauch weist etwa die Größe und Form des zu sanierenden Rohrabschnittes auf. Er besteht vorzugsweise aus einem Hauptabschnitt, der um den Packer herum angeordnet ist und im Wesentlichen den Durchmesser des Hauptrohrs aufweist. Er besteht ferner aus einem mit dem Hauptabschnitt verbundenen Zylinderabschnitt, der im Wesentlichen den Durchmesser des Hausanschlussrohrs aufweist. Der Zylinderabschnitt kann in der Praxis den Winkel zum Hauptabschnitt des Packerschlauches aufweisen, den das Hausanschlussrohr zum Hauptrohr aufweist. Mit Hilfe einer Hebevorrichtung und dem daran angeordneten Ausrichtmittel kann die Einbindung des Packerschlauches zum Stutzenschlauch, das heißt der Übergangsbereich zwischen Packerschlauch und Stutzenschlauch, in die Einmündung des Hausanschlussrohrs hineingeschoben werden. Die Rohrauskleidung besteht in dieser praktischen Ausführungsform aus einem mit aushärtbarem Harz versehenen Trägermaterial und wird auch als LCR-Liner bezeichnet. Durch das Einschieben des Übergangs zwischen Stutzenschlauch und Packerschlauch in die Einmündung des Hausanschlussrohrs wird die den Packerschlauch umgebende Rohrauskleidung positioniert. Durch das Aufblasen des Packerschlauches mit dem Stutzenschlauch wird die Rohrauskleidung, welche den Packerschlauch und den Stutzenschlauch umgibt, an den zu sanierenden Rohrabschnitt gedrückt.

Die aufblasbare Hülle, das heißt der Packerschlauch der erfindungsgemäßen Vorrichtung, kann mindestens eines der folgenden Merkmale aufweisen:
- er besteht aus einem mit Silikon beschichtetem Textilgewebe,
- er weist ein Untermaß gegenüber dem zu sanierenden Rohrabschnitt auf,
- der Stutzenschlauch des Packerschlauchs ist entsprechend dem Hausanschlusswinkels, vorzugsweise in einem Winkel von 45° bis 90°, an den das Hauptrohr ausfüllenden Abschnitt des Packerschlauchs angeformt.

Der Stutzenschlauch kann ein separates Teil sein, das fest mit dem Packerschlauch verbunden ist. Er kann alternativ von einem einstückig an den Packerschlauch angeformten Abschnitt gebildet werden.

Das Gerät, nachfolgend auch Packer genannt, saniert im Hauptkanal den Einmündungsbereich des Hausanschlusses, indem als Rohrauskleidung ein Kurzliner im Einmündungsbereich gesetzt wird und gleichzeitig eine definierte Länge in den Hausanschluss ragt, so dass diese Länge saniert wird. Dazu wird ein vorgeformter dehnfähiger Schlauch (aufblasbare Hülle) als Formgeber eingesetzt. Dieser Schlauch, der eine Form eines Zylinders (Packerschlauch) für das Hauptrohr besitzt, hat noch zusätzlich einen im allgemeinen zentrisch angeordneten zylinderförmigen Abschnitt (Stutzenschlauch), der im Winkel von 45° oder 90° an der Seitenfläche des Packerschlauchs angeordnet ist.

Der seitliche Stutzenschlauch wird vor der Sanierung in den Packerschlauch zusammen mit dem Liner (Auskleidung), der im Wesentlichen die gleiche Form wie der Formgeber hat, in den Packerschlauch reinversiert, d.h. in den Packerschlauch hinein umgestülpt. Die Luft im Packerschlauch und Stutzenschlauch wird abgesaugt. Dadurch entsteht ein Unterdruck, und sowohl der Packerschlauch als auch der Liner, der den Packerschlauch umgibt, liegen eng an der Vorrichtung an. Damit wird der Liner auf dem Gerät gegen Verrutschen gesichert.

Der Liner besitzt eine Beschichtung an der Innenseite und ist somit wasserdicht.

Das Gerät wird mit arretierten Luftschiebestangen zur Schadstelle geschoben. Die Luftschiebestangen dienen zum einen der Zufuhr von Druckluft sowie dem Absaugen der Luft und zum anderen dem Verschieben des Gerätes. An dem Gerät sind zwei teleskopartige Radsysteme (Fahrwerke) montiert. Über die Radsysteme wird das Gerät verschiebbar und verdrehbar in dem Hauptrohr geführt. Über die Luftschiebestange wird das Gerät an der Schadstelle axial verschoben oder gedreht und hierdurch optimal zum Hausanschlussrohr ausgerichtet. Für die Positionierung kann eine Kamera am Gerät montiert sein, die es ermöglicht, die Ausrichtung des Geräts zur Mündung des Hausanschlussrohrs zu erkennen.

Der Packer weist eine Packerstange auf. Zur Positionierung ist auf der Packerstange ein Hebemechanismus mit einem Druckluftzylinder montiert, welcher den Ring in den Einmündungsbereich des Hausanschlussrohrs hineinschieben kann. Dieser Ring liegt unter dem Packerschlauch direkt an der Einbindung des Packerschlauches zum Stutzenschlauch. Mit Hilfe der Kamera wird die Einmündung der Hausanschlussleitung zum Hauptkanal gesucht. Um jedoch eine eindeutige Positionierung durchführen zu können, wird von außerhalb des Rohrs über ein Steuerpult der Hebemechanismus angesteuert und dieser fährt den Ring in die Einmündung hinein. Falls jedoch der Einmündungsbereich nicht gefunden worden ist, kann das Sanierungsgerät verschoben und verdreht werden, bis der Ring in den Einmündungsbereich hineinfährt.

Nach der Positionierung wird der Packerschlauch angeblasen, und zeitlich versetzt oder verzögert wird der Stutzenschlauch mit dem Liner in den Hausanschluss inversiert, das heißt eingestülpt. Das zeitlich verzögerte Umstülpen wird durch ein hochfestes Seil, welches in einer Wickelbox geführt und gebremst wird, erreicht. Nach der Aushärtung des Liners wird die Luft aus dem Gerät abgesaugt und der Ring wird zurückgefahren. Das Gerät kann nun von der sanierten Schadstelle entfernt werden.

Die Vorrichtung der Erfindung zur Sanierung von Rohranschlüssen kann einen Antriebsmotorfür das Transportmittel zum Transportieren des Positionierungsmittels aufweisen, der ein Pneumatikmotor ist.

Alle bisher bekannten Geräte setzen zum Verfahren innerhalb des Hauptrohrs Elektromotoren, üblicherweise Schrittmotoren, ein. Derartige Elektromotoren erfordern Zuführleitungen für elektrische Energie. Zudem können Elektromotoren die Ursache von Funkenbildung sein. In Abwasserrohren entstehen häufig methanhaltige und damit brennbare Gase. Eine Funkenbildung erhöht die Gefahr eines Brandes oder einer Explosion innerhalb der zu sanierenden Abwasserkanäle oder Abwasserrohre. Aus diesem Grund schlägt die Erfindung vor, als Antriebsmotor einen Pneumatikmotor zu benutzen. Pneumatikmotoren sind in unterschiedlichster Bauweise bekannt. Sie können beispielsweise als Kolbenmotor ähnlich einem Verbrennungsmotor axial bewegliche Kolben aufweisen, die über eine Kurbelwelle einen Antriebsdrehmoment erzeugen. Die Kolben laufen in Zylindern, denen über Ventile zu bestimmten Zeiten Druckluft zugeführt wird. Auch sind Pneumatikmotoren mit mehreren in einem Ringbereich angeordneten Kolben bekannt, wobei die Pleuel der Kolben auf eine Taumelscheibe wirken. Hier erfolgt die Luftzufuhr zu den Kolben über Steuerschlitze. Schließlich sind Pneumatikmotoren mit Drehkolben oder turbinenartigen Laufrädern bekannt. Die Vorrichtung verfügt bereits zum Aufblasen der aufblasbaren Hülle über eine Druckleitung. Diese Druckleitung kann gleichzeitig als Zufuhr für das Arbeitsmedium des Pneumatikmotors dienen.

Ferner kann eine praktische Ausführungsform der Erfindung eine Heizvorrichtung zum Beheizen der aushärtbaren Rohrauskleidung aufweisen. Durch das Beheizen kann die Zeit zum Aushärten oder Abbinden des aushärtbaren Harzes reduziert werden. Die Heizvorrichtung kann beispielsweise von einer elektrischen Heizwendel gebildet werden.

Mit der Erfindungsgemäßen Vorrichtung kann ein besonderes Verfahren umgesetzt werden. Durch das Einschieben eines Ausrichtkörpers in die Mündung des Hausanschlussrohrs vor dem endgültigen Positionieren der Rohrauskleidung ist sichergestellt, dass sich die erfindungsgemäße Vorrichtung in ihrer vorbestimmten Position innerhalb des Hauptrohrs befindet.

Wie erwähnt, kann der Ausrichtkörper während des Einschiebens elastisch in Richtung der Mündung des Hausanschlussrohrs gedrückt werden. Falls der Ausrichtkörper nicht exakt zur Mündung des Hausanschlussrohrs ausgerichtet ist, wird er unter elastischer Vorspannung gegen einen Wandabschnitt des Hauptrohrs anliegen. Durch geringfügiges Verschieben oder Verdrehen, lässt sich der Ausrichtkörper zur Mündung des Hausanschlussrohrs ausrichten, wobei die elastische Vorspannkraft den Ausrichtkörper in das Hausanschlussrohr hineindrückt.

Wie erwähnt, kann bei einer praktischen Ausführungsform als Ausrichtkörper ein Ring verwendet werden. Als Positionierungsmittel kann eine aufblasbare Hülle verwendet werden, die eine Rohrauskleidung aus einem mit aushärtbarem Harz versehenen flexiblen Trägermaterial gegen einen zu sanierenden Rohrabschnitt drückt. Ein Zylinderabschnitt der Rohrauskleidung wird dabei von einem Stutzenschlauch der aufblasbaren Hülle in die Mündung des Hausanschlussrohrs gedrückt. Während des Transports der Rohrauskleidung durch das Hauptrohr und vor dem Einschieben des ringförmigen Ausrichtkörpers kann der Stutzenschlauch der Hülle zusammen mit dem Zylinderabschnitt der Rohrauskleidung durch den ringförmigen Ausrichtkörper hindurch in das Innere der Hülle gestülpt werden. Während des Transports der Hülle durch das Hauptrohr zur Rohrabzweigung hin, kann die Luft aus der Hülle abgesaugt sein. Hierdurch liegt die Hülle eng an der Vorrichtung an und wird gegen Verrutschen gesichert.

Der kritische Bereich der Rohrauskleidung ist der Bereich der Verbindung zwischen dem Zylinderabschnitt der Auskleidung und dem der Auskleidung des Hauptrohrs dienenden Abschnitt der Rohrauskleidung. Dieser Einbindungsbereich befindet sich am unteren Ende des Zylinderabschnitts. Bei einer praktischen Ausführungsform des Verfahrens wird der Einbindungsbereich mittels des Ausrichtkörpers gegen die Mündung des Hausanschlussrohrs gedrückt. Der Ausrichtkörper liegt von innen gegen den Einbindungsbereich an.

Nach dem Aushärten der Rohrauskleidung wird der Ausrichtkörper bei einer praktischen Ausführungsform des Verfahrens von der genannten Mündung wegbewegt, und die Luft wird aus der aufblasbaren Hülle abgelassen oder abgesaugt.

Das Positioniermittel für die Rohrauskleidung, das insbesondere von dem Packer gebildet wird, kann über verbundene Gestänge während des Positionierens in dem Hauptrohr verschoben und gedreht werden. Das Positioniermittel kann beim Verschieben und Drehen über ein Fahrwerk mit teleskopartigen Radsystemen geführt werden.

Gemäß einer praktischen Ausführungsform des Verfahrens kann am Ende des Stutzenschlauchs der Hülle ein im Inneren des Stutzenschlauchs verlaufendes Seil befestigt sein. Das Seil dient dem Zurückziehen des Stutzenschlauchs. Mit Hilfe des Seils kann bei in dem Stutzenschlauch vorhandenem leichtem Überdruck der Stutzenschlauch zusammen mit dem Zylinderabschnitt der Rohrauskleidung durch den ringförmigen Ausrichtkörper hindurch in die aufblasbare Hülle hineingezogen werden. Durch den Überdruck in dem Stutzenschlauch wird der nach innen gestülpte Abschnitt des Stutzenschlauchs fest zusammengedrückt. Das Ende des Zylinderabschnitts der Auskleidung kann in den Umstülpungsbereich, das heißt dem innerhalb des Stutzenschlauches fest zusammengedrückten Endabschnitt des Stutzenschlauchs, gestopft werden. Der Druck innerhalb des Stutzenschlauchs klemmt dabei das Ende des Zylinderabschnitts ein. Beim weiteren Zurückziehen des Stutzenschlauchs wird das Ende des Zylinderabschnitts mitgenommen und der Zylinderabschnitt aus seiner nach außen hervorragenden Stellung nach innen in die aufblasbare Hülle hinein umgestülpt.

Ausführungsformen der Erfindung werden nachfolgend unter Bezugnahme auf die beigefügten Zeichnungen erläutert. Diese zeigen in:
Figur 1 eine schaubildliche Darstellung einer erfindungsgemäßen Vorrichtung mit evakuiertem Packerschlauch,
Figur 2 eine der Figur 1 entsprechende Darstellung mit teilweise luftbefülltem Packerschlauch und angehobenem Ausrichtkörper,
Figur 3 eine den Figuren 1 und 2 entsprechende Darstellungen mit vollständig aufgeblasenem Packerschlauch,
Figur 4 eine Seitenansicht eines Antriebs für den Ausrichtkörper,
Figur 5 eine Vorderansicht des Antriebs aus Figur 4,
Figur 6 eine Unteransicht des Antriebs aus Figur 4,
Figur 7 eine Seitenansicht einer Ausführungsform der Stange des Packers ohne Packerschlauch, Rohrauskleidung und Fahrwerk,
Figur 8 eine Draufsicht des ringförmigen Ausrichtkörpers des Packers aus Figur 7 und
Figur 9 eine der Figur 1 entsprechende Abbildung des Packers mit einem motorisch angetriebenen Transportmittel.

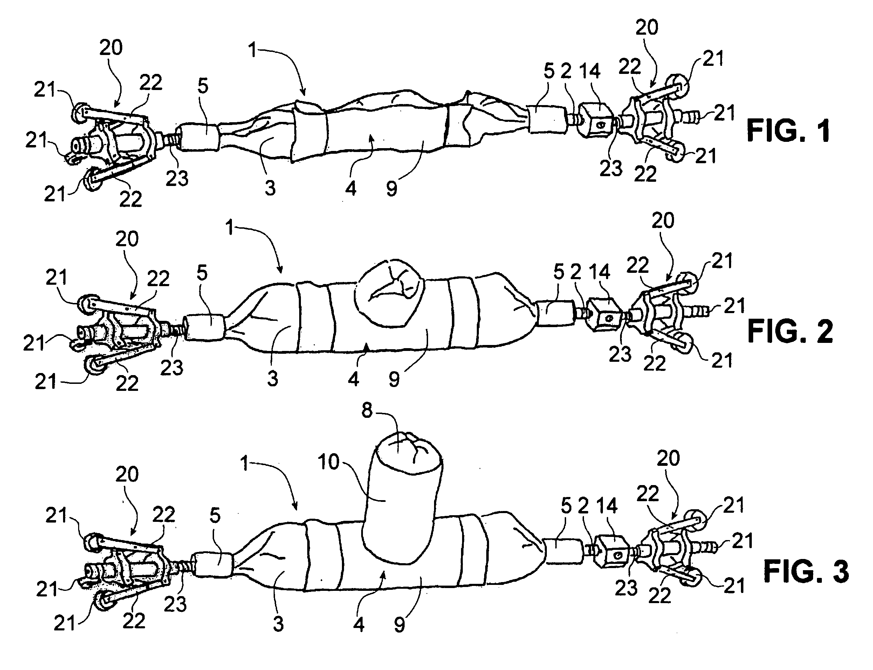

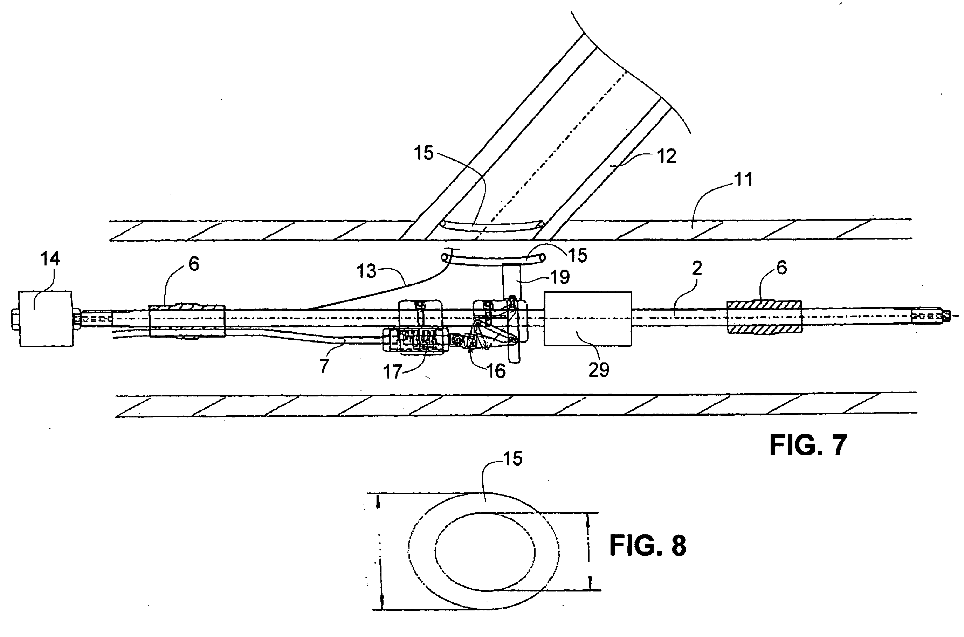

Der in den Figuren 1 bis 3 gezeigte Packer 1 besteht im Wesentlichen aus einer starren Packerstange 2, auf der der Packerschlauch 3 und eine flexible Rohrauskleidung 4 aufgeschoben ist. Jedes der beiden Enden des Packerschlauchs 3 ist mit einer Spannmanschette 5 um einen zylinderförmigen Anschlusskopf 6 (vgl. Fig. 7) gespannt, so dass eine luftdichte Verbindung entsteht. Die Anschlussköpfe 6 sind ihrerseits fest und luftdicht mit der Packerstange 2 verbunden. Der in Figur 7 links dargestellte Anschlusskopf 6 nimmt zusätzlich eine Druckleitung 7 auf.

An dem Packerschlauch 3 ist ferner ein Stutzenschlauch 8 angeformt, der einen Winkel zum Packerschlauch 3 aufweist, welcher dem Winkel zwischen einem Hausanschlussrohr und einem Hauptrohr, die im Mündungsbereich saniert werden sollen, entspricht. In den Figuren 1 bis 3 beträgt dieser Winkel 90°. Zur Sanierung des in Figur 7 dargestellten Rohranschlusses muss der Winkel 45° betragen.

Auf den Packerschlauch 3 ist die Rohrauskleidung 4 aufgeschoben, welche T-förmig ausgebildet ist. Sie besteht aus einem Hauptabschnitt 9 und einem Zylinderabschnitt 10, der in den Fig. 1-3 einen Winkel von 90° zum Hauptabschnitt 9 aufweist. Der Hauptabschnitt 9 der Auskleidung 4 erstreckt sich parallel zur Packerstange 2 und weist bei aufgeblasenem Packerschlauch 3 im Wesentlichen den gleichen Durchmesser auf, wie das zu sanierende Hauptrohr 11 (wie Figur 7). Der Zylinderabschnitt 10 weist einen dem Hausanschlussrohr 12 entsprechenden Durchmesser auf.

Der Packerschlauch 3 bildet zusammen mit seinem Stutzenschlauch 8 eine aufblasbare Hülle zum Positionieren der Auskleidung 4 in dem zu sanierenden Mündungsbereich des Hausanschlussrohrs 12 (Figur 7) in das Hauptrohr 11.

In der Figur 1 ist der Packer 1 in evakuiertem Zustand gezeigt. Hierzu wird über die Druckleitung 7 Luft aus der aufblasbaren Hülle, bestehend aus Packerschlauch 3 und Stutzenschlauch 8, abgesaugt. Das Ende des Stutzenschlauchs 8 ist verschlossen und über ein Seil 13 (siehe Figur 7) gehalten, welches durch die Packerstange 2 hindurch in eine Wickelbox 14 führt und dort aufgewickelt werden kann. Um den evakuierten Zustand der Figur 1 zu erreichen, wird zunächst der Packerschlauch 3 und die Auskleidung 4 auf der Packerstange 2 angeordnet und der Packerschlauch 3 aufgeblasen, bis die in Figur 3 dargestellte Anordnung erreicht wird. Die Auskleidung 4 besteht aus textilem Material und wird in aufgeblasenem Zustand mit einem aushärtbaren Harz getränkt. Anschließend wird das Seil 13 in die Wickelbox gewickelt. Wie in Figur 7 zu erkennen ist, verläuft das Seil 13 durch einen ringförmigen Ausrichtkörper 15 hindurch. Der Stutzenschlauch 8 wird folglich mit dem Seil 13 durch den Ring 15 hindurch in das Innere des Packerschlauchs 3 gezogen. Dabei verbleibt ein geringer Überdruck innerhalb des Packerschlauchs 3. Das obere Ende des Zylinderabschnitts 10 der Rohrauskleidung 4 wird in den Bereich der Umstülpung des zurückgezogenen Stutzenschlauchs 8 hineingestopft und beim weiteren Zurückziehen des Stutzenschlauchs mit dem Seil 13 im Bereich der Umstülpung festgeklemmt und in das Innere des Packerschlauchs 3 gezogen. Nach vollständigem Zurückziehen des Seils 13 wird die Luft aus dem Packerschlauch 3 ausgesaugt, um den in Figur 1 gezeigten evakuierten Zustand zu erreichen.

Die Wickelbox 14 kann ferner einen Mikroschalter 30 aufweisen (siehe Fig. 7), der betätigt wird, wenn das Seil 13 vollständig aus der Wickelbox 14 herausgezogen ist. Der Mikroschalter 30 löst ein Signalmittel 31 aus, das dem Bediener die vollständige Ausdehnung des Stutzenschlauchs 8 und somit die vollständige Einstülpung des Zylinderabschnitts 10 in das Hausanschlussrohr 12 anzeigt. Die Wickelbox 14 mit dem Mikroschalter 30 wirkt somit als Erfassungsmittel für die vollständige Ausdehnung des Stutzenschlauchs 8. Jedes geeignete Signalmittel kann verwendet werden, so wie ein Signallicht auf dem Steuerpult zum Bedienen des Packers oder eine Pfeife 31, die mit pneumatischem Druck betätigt wird, der z.B. aus dem pneumatischen Zylinder 17 des Hebemechanismus (siehe unten) entnommen wird. Ein durch die Pfeife 31 erzeugtes akustisches Signal wird gut durch das Kanalisationssystem, in dem der Packer eingesetzt wird, übertragen.

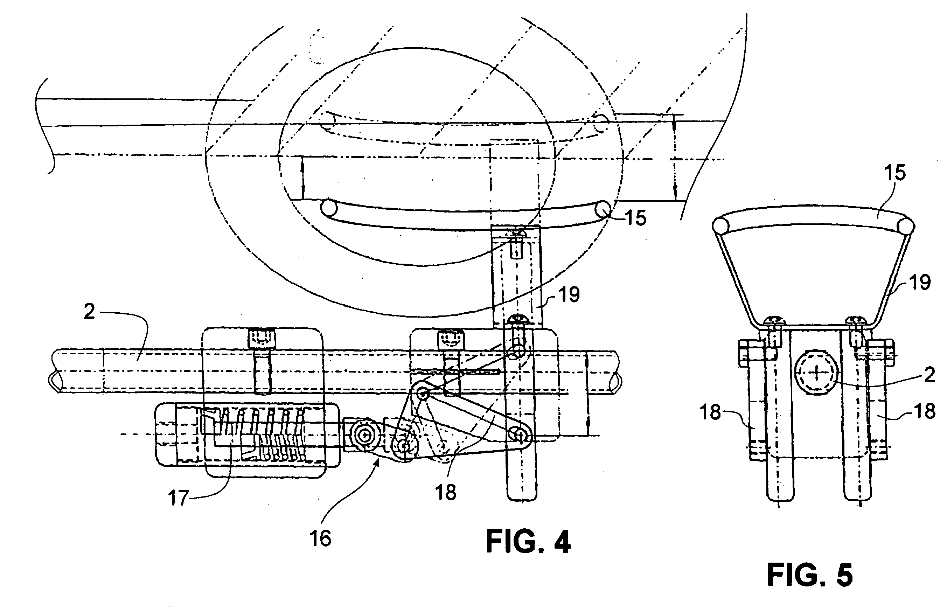

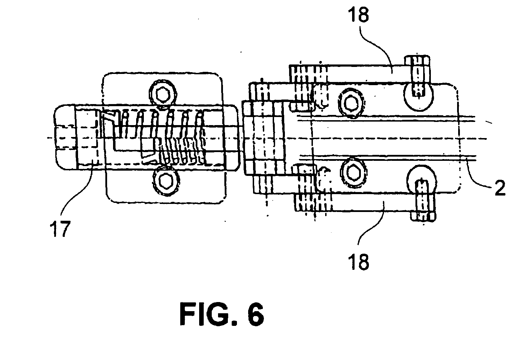

Wie insbesondere in den Figuren 4 bis 7 zu erkennen, ist der ringförmige Ausrichtkörper 15 über einen Hebemechanismus 16 an der Packerstange 2 befestigt. Der Hebemechanismus 16 weist einen Pneumatikzylinder 17 und zu beiden Seiten der Packerstange 2 einen Kniehebel 18 auf. An den freien Enden der Kniehebel 18 ist ein Traggestell 19 befestigt, welches den Ring 15 trägt. Wenn der Pneumatikzylinder 17 mit Druck beaufschlagt wird, wird der Ring 15 über den Hebemechanismus 16 nach oben bewegt und nimmt die in Figur 4 in strichpunktierten Linien eingezeichnete Position ein. Die obere Position des Rings 15 ist in Figur 7 in dünnen Linien eingezeichnet. In dieser oberen Position befindet sich der Ring 15 im Mündungsbereich des Hausanschlussrohrs 12. Wenn der Ring 15 zur Sanierung eines schräg in das Hauptrohr mündenden Hausanschlussrohrs 12 verwendet wird, ist die äußere Kontur des Ringes 15 entsprechend der Innenkontur der Mündung des Hausanschlussrohrs 12 oval auszubilden (siehe Figur 8).

An beiden Enden der Packerstange 2 sind Fahrwerke 20 angeordnet. Jedes Fahrwerk 20 besteht aus drei Führungsrädern 21, die über spreizbare Streben 22 mit der Packerstange 2 verbunden sind. Eine schraubenförmige Feder 23 drückt die Streben 22 jedes Fahrwerk über eine gemeinsame Führungshülse in die aufgespreizte Stellung. Auf diese Weise wird die Packerstange 2 durch die Fahrwerke 20 im Wesentlichen in der Mitte des Hauptrohrs 11 elastisch federnd und drehbar geführt.

Zum Anbringen einer Rohrauskleidung 4 wird der Packer in der in Figur 1 dargestellten Anordnung mit evakuiertem Packerschlauch 3 in das Hauptrohr eingebracht und zum Mündungsbereich eines Hausanschlussrohrs 12 in ein Hauptrohr 11 geschoben (siehe Figur 7). In dieser Position wird der Hebemechanismus 16 (Figuren 1 bis 3) aktiviert. Hierzu wird der Pneumatikzylinder 17 mit Druckluft beaufschlagt. Dadurch wird der Ring 15, der sich innerhalb des Packerschlauchs 3 im Bereich der Verbindung zwischen Packerschlauch 3 und Stutzschlauch 8 befindet, nach oben in die Mündung des Hausanschlussrohrs 12 gedrückt. Wenn die Mündung des Hausanschlussrohrs 12 nicht korrekt zum Ring 15 ausgerichtet ist, stützt sich dieser über die zwischenliegenden Bereiche des Packerschlauchs 3 und der Auskleidung 4 gegen die Wandung des Hauptrohrs 11 ab. Dabei wird das elastisch federnde Fahrwerk 20 zusammengedrückt. In diesem Zustand ist es möglich, den Packer 1 innerhalb des Hauptrohrs axial zu verschieben oder zu drehen, bis der Ring 15 in die Mündung des Hausanschlussrohrs 12 hineingleitet. Sobald das passiert ist, entsteht ein im Wesentlichen formschlüssiger Eingriff des als Ausrichtkörper wirkenden Rings 15 in der Mündung des Hausanschlussrohrs 12. Eine weitere Bewegung des Packers 1 ist danach nicht mehr möglich.

Wie erwähnt, ist die Außenseite des Rings 15 von dem Verbindungsbereich zwischen Packerschlauch 3 und Stutzenschlauch 8 (In Figur 7 nicht dargestellt) bzw. von dem Verbindungsbereich zwischen dem Hauptabschnitt 9 der Auskleidung 4 und deren Zylinderabschnitt 10 umgeben. Dieser Verbindungsbereich der Auskleidung 4 wird durch den ringförmigen Ausrichtkörper 15 in der für ihn vorgesehenen Endposition in dem Bereich der Rohrmündung gehalten. Nun kann über die Druckleitung 7 Druckluft in den Packerschlauch 3 eingeleitet werden, wobei der Stutzenschlauch 8 mit dem Zylinderabschnitt 10 nach außen gestülpt wird und die in Figur 3 erkennbare Form erzielt wird. Abweichend von der Darstellung in Figur 3 müssen bei einer Auskleidung eines Rohrs gemäß Figur 7 der Stutzenschlauch 8 und der Zylinderabschnitt 10 im Winkel von 45° zum Packerschlauch 3 bzw. Hauptabschnitt 9 der Aufteilung 4 verlaufen.

Die aufblasbare Hülle 3 bleibt so lange aufgeblasen, bis die Auskleidung 4 ausgehärtet ist. Anschließend kann die Luft aus der aufblasbaren Hülle, bestehend aus Packerschlauch 3 und Stutzenschlauch 8, abgesaugt werden. Schließlich kann der Packer 1 mit dem Packerschlauch 3 aus der ausgehärteten Rohrauskleidung 4 herausgezogen werden.

In der Figur 7 sind die Fahrwerke 20 des Packers 1 aus Gründen der Übersichtlichkeit nicht dargestellt.

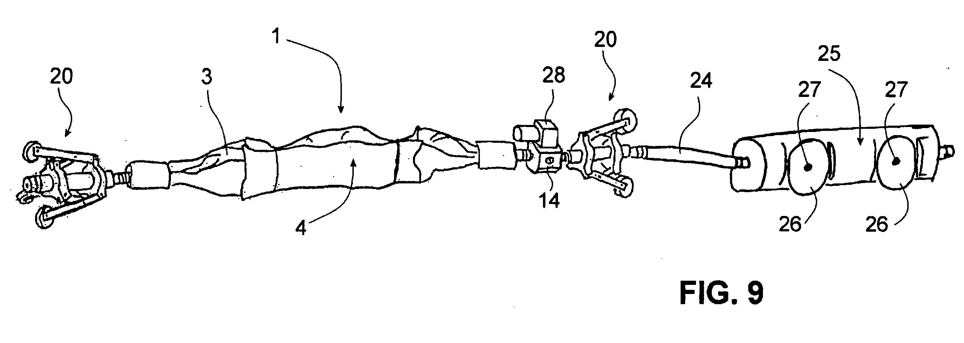

Die Figur 9 zeigt eine der Figur 1 entsprechende Darstellung des Packers 1. Der Packer 1 ist über einen biegbaren aber im Wesentlichen nicht komprimierbaren oder dehnbaren Schlauchabschnitt 24 mit einem Antriebsmotor 25 verbunden. An dem Gehäuse des Antriebsmotors 25 sind auf jeder Seite zwei Räder 26 angeordnet. Mindestens eine der Radachsen 27, welche ein Radpaar trägt, ist durch den Antriebsmotor 25 antreibbar. Der Antriebsmotor 25 ist ein Pneumatikmotor, vorzugsweise ein mit Druckluft betriebener Kolbenmotor. Auf diese Weise kann der Antriebsmotor 25 über die gleiche Druckzufuhr gespeist werden, welche die Druckluft in das Innere des Packerschlauchs 3 leitet.

Auf der Wickelbox 14 ist in der Ausführungsform aus Figur 9 zusätzlich eine elektronische Kamera 28 angeordnet. Die elektronische Kamera 28 weist vorzugsweise einen CCD-Chip zur Bildaufnahme auf. Sie ist entweder über eine Datenleitung oder eine Funkverbindung (Blue Tooth, Wireless LAN oder ähnliches) mit einer optischen Anzeigevorrichtung (Bildschirm) verbunden. Das auf dem Bildschirm wiedergegebene Bild der Kamera 28 erleichtert die Positionierung des Packers 1 im Mündungsbereich eines Hausanschlussrohrs 12.

Zusätzlich kann neben oder hinter der Kamera 28 eine Leuchte angeordnet werden, welche den von der Kamera 28 aufgenommenen Bereich ausleuchtet.

Schließlich zeigt die Figur 7 nahe dem Ring 15 eine Heizung 29. Die Heizung 29 wird vorzugsweise von einer elektrischen Heizwendel gebildet, die über einen Trenn-Transformator betrieben wird. Der Transformator kann zur Aufnahme verschiedener Eingangsspannungen ausgelegt sein. Eine derartige elektrische Heizwendel ist sehr einfach und wenig störanfällig.

Nachfolgende Merkmale sind einzeln und in Kombination miteinander bei der erfindungsgemäßen Vorrichtung vorteilhaft:
- die Rohrauskleidung 4 kann einen Zylinderabschnitt 10 aufweisen, der in die Mündung des Hausanschlussrohrs 12 einschiebbar ist;
- der Zylinderabschnitt 10 kann den Ring 15 beim Einschieben in die Mündung des Hausanschlussrohrs 12 umgeben;
- der Ausrichtkörper kann von dem Stutzenschlauch 8 der Hülle gebildet werden;
- der Stutzenschlauch 8 kann ein an den Packerschlauch 3 angeformter Abschnitt oder ein hiermit fest verbundenes Teil sein.
- der Antriebsmotor 25 kann ein Pneumatikmotor sein;
- das Positionierungsmittel 3,8 kann eine aufblasbare Hülle sein, und die Vorrichtung kann eine Druckleitung 7 für die Zufuhr von Druckluft zum Aufblasen der aufblasbaren Hülle 3,8 aufweisen, wobei die Druckleitung dem Pneumatikmotor 25 Druckluft als Arbeitsmedium zuführt;
- die Vorrichtung kann eine Heizvorrichtung 29 zum Beheizen der aushärtbaren Rohrauskleidung 4 aufweisen;
- die Heizvorrichtung 29 kann eine elektrische Heizwendel aufweisen.

Mit der Vorrichtung kann ein Verfahren zur Sanierung von Rohranschlüssen umgesetzt werden, welches folgende Schritte umfasst:
- Transportieren einer aushärtbaren Rohrauskleidung 4 zu der Abzweigung eines Hausanschlussrohrs 12 von einem Hauptrohr 11,
- Positionieren der aushärtbaren Rohrauskleidung 4 an der genannten Abzweigung,
- Aushärten der Rohrauskleidung 4,
- Einschieben eines Ausrichtkörpers 15 in die Mündung des Hausanschlussrohrs 12 vor dem Positionieren der Rohrauskleidung 4.

Ferner kann während des Einschiebens des Ausrichtkörpers 15 dieser Ausrichtkörper 15 elastisch in Richtung der Mündung des Hausanschlussrohrs 12 gedrückt werden.

Als Ausrichtkörper kann ein Ring 15 verwendet werden.

Als Positionierungsmittel kann eine aufblasbare Hülle 3 verwendet werden, die eine Rohrauskleidung 4 aus einem mit aushärtbarem Harz versehenen flexiblen Trägermaterial gegen einen zu sanierenden Rohrabschnitt drückt, wobei ein Zylinderabschnitt 10 der Rohrauskleidung 4 von einem Stutzenschlauch 8 der aufblasbaren Hülle 3 in die Mündung des Hausanschlussrohrs 12 gedrückt wird.

Der Stutzenschlauch 8 der Hülle 3 kann zusammen mit dem Zylinderabschnitt 10 der Rohrauskleidung 4 vor dem Einschieben des ringförmigen Ausrichtkörpers 15 durch diesen hindurch in das Innere der Hülle 3 gezogen werden.

In der Hülle 3 kann während des Transports zu der genannten Rohrabzweigung ein Unterdruck erzeugt werden.

Der Zylinderabschnitt 10 kann im Bereich seiner Verbindung mit dem gegen das Hauptrohr 11 anliegenden Hauptabschnitt 9 der Rohrauskleidung 4 gegen die Mündung des Hausanschlussrohrs 12 gedrückt werden.

Der Ausrichtkörper 15 kann nach dem Aushärten der Rohrauskleidung 4 von der genannten Mündung wegbewegt werden und die Luft aus der aufblasbaren Hülle 3 abgelassen werden.

Ein Positioniermittel 3,8 für die Rohrauskleidung 4 kann über verbundene Gestänge 2 beim Positionieren in dem Hauptrohr 11 verschoben und gedreht werden.

Ein Positioniermittel 3,8 kann beim Verschieben und Drehen über ein Fahrwerk 20 mit teleskopartigen Radsystemen geführt werden.

Am Ende des Stutzenschlauchs 8 kann ein im Inneren des Stutzenschlauchs 8 verlaufendes Seil 13 befestigt ist, welches zum Zurückziehen des Stutzenschlauchs 8 zusammen mit dem Zylinderabschnitt 10 der Rohrauskleidung 4 zurückgezogen wird.

Beim Zurückziehen kann in den Stutzenschlauch 8 ein Überdruck geleitet werden und das Ende des Zylinderabschnitts 10 kann in den Umstülpungsbereich des Stutzenschlauchs 8 gestopft und beim weiteren Zurückziehen hierdurch mitgenommen werden.

### Bezugszeichenliste:

- 1: Packer
- 2: Packerstange
- 3: Packerschlauch, aufblasbare Hülle
- 4: Auskleidung
- 5: Spannmanschetten
- 6: Anschlusskopf
- 7: Druckleitung
- 8: Stutzenschlauch
- 9: Hauptabschnitt
- 10: Zylinderabschnitt
- 11: Hauptrohr
- 12: Hausanschlussrohr
- 13: Seil
- 14: Wickelbox
- 15: Ring, ringförmiger Ausrichtkörper
- 16: Hebemechanismus, Antrieb
- 17: Pneumatikzylinder
- 18: Kniehebel
- 19: Traggestell
- 20: Fahrwerk
- 21: Führungsrad
- 22: Strebe
- 23: Feder
- 24: Schlauchabschnitt
- 25: Antriebsmotor
- 26: Antriebsrad
- 27: Radachse
- 28: elektronische Kamera
- 29: Heizung
- 30: Mikroschalter
- 31: Signalpfeife

## Patentansprüche

1. Vorrichtung zur Sanierung von Rohranschlüssen, mit
einem Positionierungsmittel (3, 8) zum Positionieren einer aushärtbaren Rohrauskleidung (4) an der Abzweigung eines Hausanschlussrohrs von einem Hauptrohr (11),
einem Transportmittel zum Transportieren des Positionierungsmittels (3, 8) und der Rohrauskleidung (4) zu der genannten Abzweigung,
einen Ausrichtkörper (15), der beweglich an dem Transportmittel angeordnet ist und der in die Mündung des Hausanschlussrohrs (12) bewegbar ist, und
einen Antrieb (16) zum Bewegen des Ausrichtkörpers (15) in die Mündung des Hausanschlussrohrs (12),
**dadurch gekennzeichnet, dass** das Positionierungsmittel (8) mit einem Erfassungsmittel (14, 30) zur Erfassung der vollständigen Ausdehnung des Positionierungsmittels (8) verbunden ist, wobei das Positionierungsmittel ein Stutzenschlauch (8) ist und das Erfassungsmittel eine Wickelbox (14) ist, welche einen Schalter (30) aufweist und mit dem Stutzenschlauch (8) durch ein Seil (13) verbunden ist, und wobei der Schalter (30) mit einem Signalmittel (31) wirkend verbunden ist.

2. Vorrichtung nach einem der vorangehenden Ansprüche, **dadurch gekennzeichnet, dass** das Signalmittel mindestens ein aus der folgenden Gruppe ausgewähltes Mittel ist:
Signallicht
Pfeife (31).

3. Vorrichtung nach einem der vorangehenden Ansprüche, **dadurch gekennzeichnet, dass** sie Federmittel (23) aufweist, die den Ausrichtkörper (15) elastisch federnd in die Mündung des Hausanschlussrohrs (12) drücken und ein Verschieben des Ausrichtkörpers (15) ermöglichen, bis dieser in der Mündung des Hausanschlussrohrs verrastet.

4. Vorrichtung nach Anspruch 3, **dadurch gekennzeichnet, dass** der Ausrichtkörper von einem Ring (15) gebildet wird.

5. Vorrichtung nach einem der vorangehenden Ansprüche, **dadurch gekennzeichnet, dass** die Rohrauskleidung (4) ein mit aushärtbarem Harz versehenes flexibles Trägermaterial aufweist.

6. Vorrichtung nach Anspruch 5, **dadurch gekennzeichnet, dass** die Rohrauskleidung (4) einen Zylinderabschnitt (10) aufweist, der in die Mündung des Hausanschlussrohrs (12) einschiebbar ist.

7. Vorrichtung nach Anspruch 6, **dadurch gekennzeichnet, dass** das Positionierungsmittel eine aufblasbare Hülle (3) ist, die einen Stutzenschlauch (8) aufweist, der im aufgeblasenen Zustand den Zylinderabschnitt (10) gegen die Wand des Hausanschlussrohrs (12) drückt.

8. Vorrichtung nach einem der Ansprüche 3 bis 7, **dadurch gekennzeichnet, dass** das Transportmittel mindestens ein Fahrwerk (20) aufweist, welches die genannten Federmittel (23) aufweist, über die Räder (21) federnd mit dem Transportmittel verbunden sind.

9. Vorrichtung nach Anspruch 7 oder 8, **dadurch gekennzeichnet, dass** die aufblasbare Hülle ein inversierbarer und dehnfähiger Packerschlauch (3) ist, welcher etwa die Größe und Form des zu sanierenden Rohrabschnittes, einschließlich des eingebundenen Stutzenschlauches (8), besitzt, wobei mit Hilfe eines Hebemechanismus (16) und dem Ausrichtmittel (15) die Einbindung des Packerschlauches (3) zum Stutzenschlauch (8) in die Einmündung des Hausanschlussrohrs (12) hineinschiebbar ist und wobei die Rohrauskleidung (4) aus einem mit aushärtbarem Harz versehenen Trägermaterial (LCR-Liner) durch das Hineinschieben positioniert und durch Aufblasen des Packerschlauches (3) an den zu sanierenden Rohrabschnitt gedrückt wird.

10. Vorrichtung nach Anspruch 9, **dadurch gekennzeichnet, dass** der Packerschlauch (3) mindestens eines der folgenden Merkmale aufweist:
er besteht aus einem mit Silikon beschichteten Textilgewebe,
er weist ein Untermaß gegenüber dem zu sanierenden Rohrabschnitt auf,
der Stutzenschlauch (8) des Packerschlauchs (3) ist entsprechend dem Hausanschlusswinkel, vorzugsweise in einem Winkel von 45° bis 90°, an den das Hauptrohr (11) ausfüllenden Abschnitt (9) des Packerschlauchs (3) angeformt.

## Claims

1. An apparatus for repairing pipe connections, comprising
a positioning means (3, 8) for positioning a curable pipe liner (4) at the junction of a house connection pipe and a main pipe (11),
a transporting means for transporting the positioning means (3, 8) and the pipe liner (4) to said junction,
an alignment body (15) moveably arranged on the transporting means and moveable into the mouth of the house connection pipe (12), and
a drive (16) for moving the alignment body (15) into the mouth of the house connection pipe (12),
**characterized in that** the positioning means (8) is connected to a sensing means (14, 30) for sensing the complete expansion of the positioning means (8), wherein the positioning means is a lateral hose (8) and the sensing means is a reeling box (14) comprising a switch (30) and connected to the lateral hose (8) by means of a cable (13), and wherein the switch (30) is effectively connected to a signaling means (31).

2. The apparatus according to any one of the preceding claims, **characterized in that** the signaling means is at least a means selected from the group comprising:
signal lamp
whistle (31).

3. The apparatus according to any one of the preceding claims, **characterized in that** it comprises spring means (23) for resiliently pressing the alignment body (15) into the mouth of the house connection pipe (12) and enabling the alignment body (15) to be displaced until it is locked in place in the mouth of the house connection pipe.

4. The apparatus according to claim 3, **characterized in that** the alignment body is formed by a ring (15).

5. The apparatus according to any one of the preceding claims, **characterized in that** the pipe liner (4) comprises a flexible substrate material provided with curable resin.

6. The apparatus according to claim 5, **characterized in that** the pipe liner (4) comprises a cylinder section (10) able to be inserted in the mouth of the house connection pipe (12).

7. The apparatus according to claim 6, **characterized in that** the positioning means is an inflatable sheath (3) comprising a lateral hose (8), which, in the inflated state, presses the cylinder section (10) against the side wall of the house connection pipe (12).

8. The apparatus according to any one of claims 3 to 7, **characterized in that** the transporting means comprises at least one chassis (20) comprising said spring means (23), by which wheels (21) are coupled to the transporting means in a sprung fashion.

9. The apparatus according to claim 7 or 8, **characterized in that** the inflatable sheath is a reversible and expandable packer hose (3) which, including the transition to the lateral hose (8), has the size and shape of the pipe section to be repaired, wherein the transition between the packer hose (3) and the lateral hose (8) is insertable into the mouth of the house connection pipe (12) with the aid of a lifting mechanism (16) and wherein the pipe liner (4) of a substrate material provided with a curable resin (LCR liner) is positioned by means of the insertion operation and is pressed against the pipe section to be repaired by inflating the packer hose (3).

10. The apparatus according to claim 9, **characterized in that** the packer hose (3) has at least one of the following features:
it is of a textile material coated with silicone,
it has a reduced dimension in relation to the pipe section to be repaired,
the lateral hose (8) of the packer hose (3) is integrally formed preferably at an angle of 45° to 90° to the section (9) of the packer hose (3) filling the main pipe (11).

## Revendications

1. Dispositif pour la rénovation de raccords de tubes, comprenant
un moyen de positionnement (3, 8) pour le positionnement d'un habillage tubulaire durcissable (4) au niveau de la ramification d'un tube de raccordement domestique depuis un tube principal (11),
un moyen de transport pour transporter le moyen de positionnement (3, 8) et l'habillage tubulaire (4) jusqu'à la ramification précitée,
un corps d'orientation (15), qui est agencé déplaçable sur le moyen de transport et qui est déplaçable dans l'embouchure du tube de raccordement domestique (12), et
un entraînement (16) pour déplacer le corps d'orientation (15) dans l'embouchure du tube de raccordement domestique (12),
**caractérisé en ce que** le moyen de positionnement (8) est relié à un moyen détecteur (14, 30) pour détecter l'extension complète du moyen de positionnement (8), ledit moyen de positionnement étant un tuyau à embout (8) et le moyen de détection est une boîte dite de "Wickel" (14), laquelle comprend un commutateur (30) et est reliée au tuyau à embout (8) par un câble (13), et dans lequel le commutateur (30) est relié de façon active avec un moyen de signalisation (31).

2. Dispositif selon l'une des revendications précédentes, **caractérisé en ce que** le moyen de signalisation est au moins un moyen choisi parmi le groupe suivant :
lampe de signalisation
sifflet (31).

3. Dispositif selon l'une des revendications précédentes, **caractérisé en ce qu'**il comprend des moyens à ressort (23), qui poussent avec effet élastique le corps d'orientation (15) dans l'embouchure du tube de raccordement domestique (12) et permettent un mouvement du corps d'orientation (15) jusqu'à ce que celui-ci s'enclenche dans l'embouchure du tube de raccordement domestique.

4. Dispositif selon la revendication 3, **caractérisé en ce que** le corps d'orientation est formé par une bague (15).

5. Dispositif selon l'une des revendications précédentes, **caractérisé en ce que** l'habillage tubulaire (4) comprend un matériau porteur flexible pourvu de résine durcissable.

6. Dispositif selon la revendication 5, **caractérisé en ce que** l'habillage tubulaire (4) comprend un tronçon cylindrique (10), qui peut être enfilé dans l'embouchure du tube de raccordement domestique (12).

7. Dispositif selon la revendication 6, **caractérisé en ce que** le moyen de positionnement est un manchon gonflable (3), qui comprend un tuyau à embout (8), lequel pousse à l'état gonflé le tronçon cylindrique (10) contre la paroi du tube de raccordement domestique (12).

8. Dispositif selon l'une des revendications 3 à 7, **caractérisé en ce que** le moyen de transport comprend au moins un mécanisme de roulement (20), lequel comporte les moyens à ressort précités (23), via lesquels des roues (21) sont reliées avec effet ressort au moyen de transport.

9. Dispositif selon la revendication 7 ou 8, **caractérisé en ce que** le manchon gonflable est un tuyau dit de "Packer" (3) inversible et capable d'extension, qui possède approximativement la taille et la forme du tronçon de tube à rénover, y compris le tuyau à embout (8) intégré, dans lequel à l'aide d'un mécanisme de levage (16) et à l'aide du moyen d'orientation (15), la liaison du tuyau de Packer (3) avec le tuyau à embout (8) est susceptible d'être enfilée dans l'embouchure du tube de raccordement domestique (12), et dans lequel l'habillage tubulaire (4) formé d'un matériau porteur (doublage LCR) pourvu de résine durcissable est positionné par l'enfilement et est poussé contre le tronçon de tube à rénover par gonflage du tuyau de Packer (3).

10. Dispositif selon la revendication 9, **caractérisé en ce que** le tuyau de Packer (3) comprend l'une au moins des caractéristiques suivantes :
il est formé d'un tissu textile revêtu de silicone,
il présente une dimension inférieure au tronçon de tube à rénover,
le tuyau à embout (8) du tuyau de Packer (3) est conformé en correspondance de l'angle du raccord domestique, de préférence sous un angle de 45° à 90°, au tronçon (9) du tuyau de Packer (3) qui remplit le tube principal (11).
